# FASCICULE DE BREVET EUROPEEN

(11) **EP 3 366 531 B1**
(45) Date de publication et mention de la délivrance du brevet: **16.09.2020**
(21) Numéro de dépôt: 18020077.6
(22) Date de dépôt: 22.02.2018
(51) Int. Cl.: B60S 1/38

(54) **EMBOUT D'EXTREMITE ADAPTABLE POUR BALAI D'ESSUYAGE**
ANPASSBARE ENDKAPPE FÜR EIN WISCHBLATT
ADAPTABLE END CAP FOR A WIPER BLADE

(30) Priorité: 22.02.2017 FR 1751404
(43) Date de publication de la demande: 29.08.2018
(73) Titulaire: Valeo Systèmes d'Essuyage, 78322 Le Mesnil Saint Denis (FR)
(72) Inventeur: Houssat, M. Stéphane, 63500 ISSOIRE (FR); Mouleyre, M. Guillaume, 63500 ISSOIRE (FR); Gaucher, M. Vincent, 63500 ISSOIRE (FR)
(74) Mandataire: Valeo Vision

(56) Documents cités:
- EP-A1- 2 233 375
- EP-A1- 3 081 440
- EP-A1- 3 251 903
- DE-A1-102011 078 172
- FR-A1- 2 922 502

## Description

Le domaine de la présente invention est celui des balais d'essuyage utilisés sur les véhicules automobiles. L'invention concerne plus particulièrement les embouts montés à l'extrémité d'un de ces balais d'essuyage, notamment pour participer à la fixation des composants du balai d'essuyage.

Les véhicules automobiles sont couramment équipés de systèmes d'essuie-glace pour assurer un balayage et un lavage du pare-brise et éviter que la vision qu'a le conducteur de son environnement ne soit perturbée. Ces systèmes d'essuie-glace comportent des balais d'essuyage qui sont classiquement entraînés par un bras effectuant un mouvement de va-et-vient angulaire, ces balais, de forme allongée, étant porteurs eux-mêmes de lames racleuses réalisées en une matière élastique. Ces lames frottent contre le pare-brise et évacuent le liquide présent sur le pare-brise en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur.

Les balais d'essuyage comprennent généralement un élément de support de montage d'une lame d'essuyage en caoutchouc apte à être plaquée contre la vitre à nettoyer, et au moins un embout d'extrémité pour bloquer en position la lame dans l'élément de support. La lame est introduite dans l'élément de support de montage par coulissement longitudinal et elle est bloquée en position par l'embout d'extrémité, qui est rendu solidaire à la fois d'une extrémité longitudinale de l'élément de support de montage et d'une extrémité longitudinale de la lame, afin d'empêcher le déplacement longitudinal de la lame par rapport à l'élément de support de montage lors du mouvement de va et vient le long de la vitre à nettoyer imposé par le bras.

Par ailleurs, on connait des balais qui comportent un ou plusieurs éléments de rigidification, notamment sous forme de vertèbres, qui s'étendent sensiblement sur toute la longueur du balai et dont la fonction est d'assurer le contact de la lame d'essuyage avec le pare-brise, par un effet ressort de l'élément de rigidification. Ces éléments de rigidification sont en outre configurés pour participer à la fixation du balai dans les embouts d'extrémités, par des encoches formées dans les éléments de rigidification et de formes complémentaires de moyens de verrouillage portés par les embouts.

FR 2 922 502, DE 10 2011 078172, EP 2 233 375, EP 3 081 440 et EP 3 251 903 divulguent différents balais munis d'embouts d'extrémité selon l'état de la technique.

Chaque embout d'extrémité présente une forme creuse comprenant un couloir de réception configuré pour accueillir et bloquer au moins une extrémité de l'élément de rigidification associé au balai. Des moyens de verrouillage sont disposés dans l'embout d'extrémité pour bloquer en position l'extrémité de cet élément de rigidification, et il est recherché un couloir de réception adapté aux dimensions de l'élément de rigidification pour guider correctement celui-ci lors de son insertion et s'assurer de l'efficacité des moyens de verrouillage. Le couloir de réception est donc agencé en fonction de la forme et des dimensions de l'extrémité de l'élément de rigidification. Or, il s'avère que les formes et les dimensions des extrémités des éléments de rigidification peuvent varier en fonction du modèle de balai d'essuyage. De ce fait, des embouts d'extrémité spécifiques doivent être utilisés pour chaque modèle de balai d'essuyage.

Dans ce contexte, l'invention vise à proposer un embout d'extrémité standard permettant de s'adapter à différents balais d'essuyage respectivement munis d'un élément de rigidification aux dimensions spécifiques et d'offrir pour chacun de ses balais un blocage en position le plus efficace position.

L'invention a pour objet un embout d'extrémité pour un balai d'essuyage d'une vitre d'un véhicule comprenant un logement s'étendant principalement selon une première direction et apte à recevoir indifféremment un premier type d'élément de rigidification d'une première largeur ou un deuxième type d'élément de rigidification d'une deuxième largeur supérieure à la première largeur. L'embout d'extrémité selon l'invention comporte au moins un moyen de verrouillage configuré pour assurer la retenue de l'embout d'extrémité sur le balai et au moins un dispositif de maintien en position à déformation élastique agencé pour coopérer indifféremment avec le premier type d'élément de rigidification ou le deuxième type d'élément de rigidification. Le dispositif de maintien en position est agencé pour prendre au moins une position de repos non déformée et une position déformée élastiquement dans laquelle le dispositif de maintien en position prend appui contre le deuxième type de l'élément de rigidification pour le bloquer dans une position finale de montage.

Cet agencement permet d'accueillir et de retenir un élément de rigidification d'un balai d'essuyage choisi parmi plusieurs types disponibles. Ainsi, le besoin d'adapter spécifiquement l'embout d'extrémité aux dimensions ou à certaines dimensions de l'élément de rigidification ou de l'une de ses parties est éliminé ou en tout cas amoindri. Notamment, la largeur de l'élément de rigidification peut être plus ou moins importante et permettre en tout état de cause son insertion dans l'embout d'extrémité. Cet avantage est significatif, autant pour le fabricant de balais d'essuyage, en limitant le coût de l'élaboration et de la fabrication de plusieurs types d'embout d'extrémité, voire d'un type d'embout d'extrémité par type de balai d'essuyage, que pour l'utilisateur final du balai d'essuyage souhaitant remplacer un embout d'extrémité sur son véhicule, en limitant le risque que cet utilisateur n'installe pas l'embout d'extrémité correspondant à son balai d'essuyage et que la connexion entre les deux soit déficiente, ce qui pose un risque pour l'utilisateur ainsi que les autres usagers de la route. Le fait que le dispositif de maintien en position puisse s'adapter élastiquement à plusieurs types d'éléments de rigidification permet d'assurer un guidage correct de ceux-ci lors de leur insertion dans l'embout d'extrémité commun à tous ces types, et ainsi d'assurer leur positionnement correct en face du ou des moyens de verrouillage que comporte l'embout d'extrémité.

L'embout d'extrémité selon l'invention comprend avantageusement l'une quelconque au moins des caractéristiques suivantes prises seules ou en combinaison :
- la position de repos du dispositif de maintien en position correspond à la position du dispositif de maintien en position quand aucun élément de rigidification est inséré dans l'embout d'extrémité, ou lors de l'insertion d'un premier type d'élément de rigidification dans l'embout d'extrémité ;
- la position déformée du dispositif de maintien en position correspond à la position du dispositif de maintien en position lors de l'insertion d'un deuxième type d'élément de rigidification dans l'embout d'extrémité, le deuxième type d'élément de rigidification différant du premier type d'élément de rigidification au moins par sa largeur plus importante ;
- en position de repos, le dispositif de maintien en position est agencé pour servir de moyen de guidage au premier type d'élément de rigidification ;
- en position de repos, le dispositif de maintien en position s'étend parallèlement ou sensiblement parallèlement à la première direction ;
- le dispositif de maintien en position s'étend en position de repos parallèlement ou sensiblement parallèlement à la direction d'insertion de l'élément de rigidification dans l'embout d'extrémité ; l'agencement du dispositif de maintien en position parallèlement à la direction d'insertion des éléments de rigidification permet de diminuer les risques de cassure de ce dispositif de maintien en position au moment de l'insertion et du contact de l'élément de rigidification sur le dispositif de maintien déformable élastiquement, étant entendu qu'une telle cassure empêcherait par la suite le montage de l'embout d'extrémité sur l'élément de rigidification et sur le balai d'essuyage ;
- le dispositif de maintien en position est agencé pour subir une déformation au contact d'une partie terminale de l'élément de rigidification dans le logement ; cette déformation permet de moduler l'espace disponible pour accueillir la partie terminale de l'élément de rigidification ; c'est cette déformation qui fait passer le dispositif de maintien en position de la position de repos à la position déformée ;
- la partie terminale de l'élément de rigidification est définie comme la partie de l'élément de rigidification insérée en premier dans l'embout d'extrémité. C'est la partie de l'élément de rigidification qui est au contact des nervures quand celles-ci sont en position déformée ;
- la déformation du dispositif de maintien en position se fait selon un plan de débattement, le plan de débattement étant un plan parallèle au plan défini par l'élément de rigidification ; plus particulièrement, la déformation se fait selon le plan de débattement et selon un sens dirigé vers l'extérieur de l'embout d'extrémité ; alternativement, le dispositif de maintien en position est agencé selon un plan parallèle au plan défini par l'élément de rigidification, le plan de débattement étant un plan perpendiculaire au plan défini par l'élément de rigidification et selon un sens dirigé vers l'extérieur de l'embout d'extrémité ;
- le dispositif de maintien en position prend la forme d'une nervure, dont au moins une partie est déformable élastiquement au passage de l'élément de rigidification d'un premier ou d'un deuxième type ; une nervure est un volume ayant la forme d'une plaque de faible épaisseur ; par plaque de faible épaisseur, on entend un parallélépipède rectangle dont l'une des dimensions est très inférieure aux deux autres, par exemple dans un rapport de 1 pour 4 ;
- le dispositif de maintien en position comporte deux nervures dont au moins une partie est déformable élastiquement au passage de l'élément de rigidification d'un premier ou d'un deuxième type et qui sont disposées parallèlement l'une à l'autre ; on peut avoir un premier type d'élément de rigidification, d'une largeur inférieure à la dimension entre les deux nervures, les nervures ayant dans cette disposition un rôle de guidage de l'élément de rigidification, en particulier sans déformation ni compensation de jeu ; avec le deuxième type d'élément de rigidification, la largeur de l'élément de rigidification est supérieure à la dimension entre les deux nervures, les nervures ont un rôle de guidage et de rattrapage de jeu, en se déformant lors de l'insertion de l'élément de rigidification de deuxième type ;
- les deux nervures sont disposées symétriquement de part et d'autre d'un plan longitudinal de l'embout d'extrémité ; le plan longitudinal mentionné passe en particulier par le centre d'une rainure agencée pour retenir un talon de la lame et par le centre du logement ; le plan longitudinal mentionné est le plan longitudinal médian de l'embout d'extrémité ;
- les deux nervures sont distantes, dans une position d'origine non déformée, d'une dimension inférieure à la dimension, selon une direction parallèle, du logement ;
- la ou les nervures sont fabriquées dans un matériau ou un alliage de matériaux possédant des propriétés élastiques ;
- l'embout d'extrémité est délimité par une enveloppe externe, la ou les nervures s'étendant depuis une face interne de l'enveloppe externe ;
- la ou les nervures s'étendent en fond du logement par rapport à un sens d'insertion de l'élément de rigidification dans l'embout ; en d'autres termes, l'embout d'extrémité comprend une ouverture par laquelle l'élément de rigidification est introduit dans le logement et une paroi extérieure qui ferme l'extrémité de l'embout à l'opposé de cette ouverture, la nervure s'étendant depuis la paroi extérieure de l'embout d'extrémité ;
- l'enveloppe externe comprend une paroi de couverture et une paroi de fond, la paroi de fond étant ouverte pour laisser traverser le balai et la paroi de couverture étant disposée à l'opposé de la paroi de fond, la ou les nervures s'étendant depuis la paroi de couverture de l'enveloppe externe ;
- la ou les nervures ont une forme de L, pris dans une coupe perpendiculaire au plan défini par l'élément de rigidification et parallèle au sens d'insertion de l'élément de rigidification dans l'embout d'extrémité ;
- la ou les nervures présentent une partie de base en saillie de l'enveloppe externe de l'embout et une lame déformable prolongeant la partie de base à l'opposé de cette enveloppe externe ;
- la lame déformable et la partie de base qu'elle prolonge ont la même épaisseur ; alternativement, la lame déformable est effilée par rapport à la partie de base qu'elle prolonge, c'est-à-dire que l'épaisseur de la lame déformable est inférieure à la partie de base correspondante ; alternativement, la jonction entre la lame déformable et la partie de base correspondante a une épaisseur inférieure à l'épaisseur de la lame déformable et à l'épaisseur de la partie de base ; alternativement, une partie de base comporte une pluralité de lames déformables de faible longueur, alignées les unes aux autres et espacées entre elles ;
- le moyen de verrouillage comporte une dent, destinée à se loger dans une encoche formée sur ou dans l'élément de rigidification ; le moyen de verrouillage est déformable élastiquement, notamment au passage de l'élément de rigidification, pour reprendre sa forme d'origine lorsque la dent peut pénétrer dans une encoche ménagée sur l'élément de rigidification ;
- un moyen de verrouillage et un dispositif de maintien en position sont agencés de manière à ce que ledit dispositif de maintien en position forme butée au déplacement élastique du moyen de verrouillage ;
- un moyen de verrouillage et un dispositif de maintien en position sont agencés de manière à se déformer élastiquement au passage de l'élément de rigidification selon des directions différentes, notamment perpendiculaires.

L'invention se rapporte également à un balai d'essuyage comprenant au moins un élément de rigidification ainsi qu'une lame destinée à être appliquée contre la vitre, et au moins un embout d'extrémité selon l'aspect précédent, où la partie terminale de l'élément de rigidification s'étend dans le logement de l'embout d'extrémité. Avantageusement, la dimension entre les deux nervures du dispositif de maintien en position est inférieure ou égale à la largeur de la partie terminale de l'embout d'extrémité. Notamment, la dimension entre les deux nervures est égale à la largeur du plus petit type d'élément de rigidification avec lequel l'embout d'extrémité est agencé pour coopérer.

L'invention se rapporte également à un système d'essuyage d'une vitre d'un véhicule comprenant un bras et un balai d'essuyage selon l'aspect précédent.

D'autres caractéristiques, détails et avantages de l'invention ressortiront plus clairement à la lecture de la description donnée ci-après à titre indicatif en relation avec des dessins dans lesquels :
- la figure 1 est une vue générale, en perspective, d'un balai d'essuyage selon l'invention,
- la figure 2 est une vue en perspective de face d'un embout d'extrémité équipant un balai d'essuyage tel qu'illustré sur la figure 1, et la figure 2a est une représentation schématique de l'embout de la figure 2 avec un élément de rigidification et une lame d'essuyage du balai tels qu'ils sont logés dans l'embout d'extrémité,
- la figure 3 est une vue en perspective du dessous de l'embout d'extrémité selon l'invention, illustré partiellement selon le plan de coupe 1-1 illustré sur la figure 2,
- la figure 4 est une vue en perspective, vue de dessous, de l'embout d'extrémité selon l'invention de la figure 2,
- les figures 5 et 6 sont des vues selon une perspective similaire à celle de la figure 4, dans lesquelles on a illustré l'embout d'extrémité avec un élément de rigidification d'un premier type (figure 5) et avec un élément de rigidification d'un deuxième type (figure 6).

Il faut tout d'abord noter que les figures exposent l'invention de manière détaillée pour mettre en œuvre l'invention, lesdites figures pouvant bien entendu servir à mieux définir l'invention le cas échéant.

Dans la suite de la description, les dénominations longitudinales ou latérales, dessus, dessous, devant, derrière se réfèrent à l'orientation du balai d'essuyage ou de l'embout d'extrémité selon l'invention. La direction longitudinale L correspond à l'axe principal du balai d'essuyage dans lequel il s'étend, alors que les orientations latérales correspondent à des droites concourantes, dans une direction transversale T, c'est-à-dire qui croisent la direction longitudinale, notamment perpendiculaires à l'axe longitudinal du balai d'essuyage dans son plan de déplacement en rotation le long de la surface à nettoyer. Pour les directions longitudinales, les dénominations extérieure ou intérieure s'apprécient par rapport au point de fixation du balai d'essuyage sur un bras d'entrainement en rotation de ce balai, la dénomination intérieure correspondant à la partie où le bras et un demi-balai s'étendent. Enfin, les directions référencées comme supérieures ou inférieures correspondent à une direction verticale V du balai d'essuyage, c'est-à-dire à des orientations perpendiculaires au plan de déplacement en rotation du balai d'essuyage, la dénomination inférieure contenant le plan de la surface à nettoyer.

Les directions évoquées ci-dessus sont également visibles dans un trièdre L, V, T représenté sur les figures.

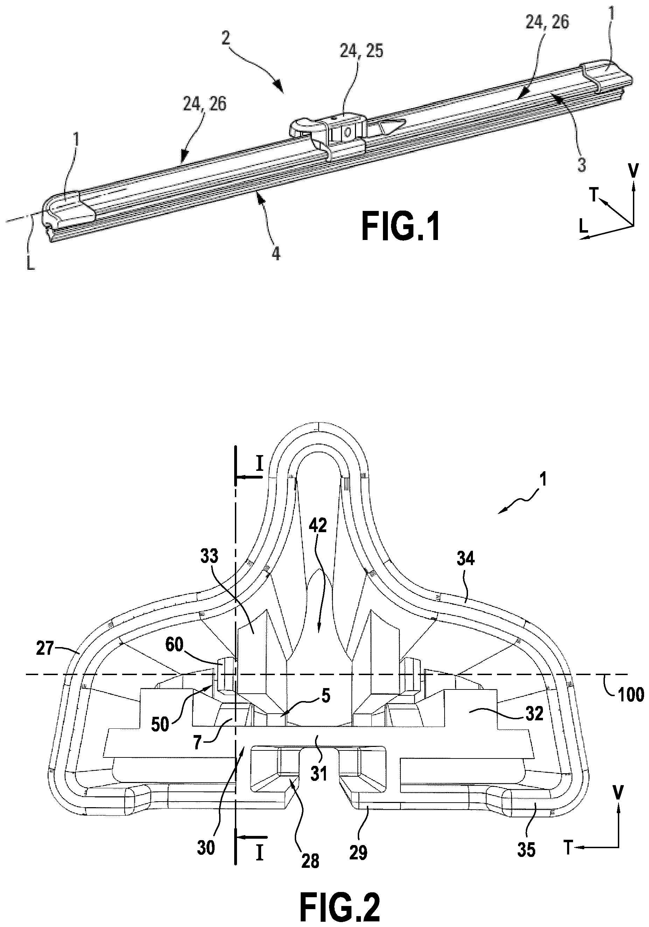

En se référant tout d'abord à la figure 1, on voit un balai d'essuyage 2 selon l'invention. Un tel balai d'essuyage 2 est utilisé pour racler une vitre d'un véhicule et déplacer hors du champ de vision d'un conducteur le liquide présent sur cette vitre. Le balai d'essuyage 2 est constitué d'au moins un élément de rigidification 3, un composant 24, une lame de frottement 4 et au moins un embout d'extrémité 1 installé sur une partie terminale 6 de l'élément de rigidification 3. L'élément de rigidification 3 est un support longitudinal.

L'élément de rigidification 3 peut prendre la forme d'une unique bande métallique plate et élastique. Selon une alternative, l'élément de rigidification 3 peut être formé par deux bandes métalliques et élastiques logées chacune dans une rainure ménagée de part et d'autre de la lame 4. Dans les deux cas ci-dessus, à l'état de repos, l'élément de rigidification est courbé pour suivre la courbure du pare-brise sur laquelle porte le balai, selon un plan perpendiculaire à une direction longitudinale de l'élément de rigidification. La fonction d'un tel élément de rigidification est de répartir les efforts d'appui le long de la lame 4 et de s'assurer ainsi du bon placage de la lame contre le pare-brise.

La partie terminale 6 de l'élément de rigidification 3 est la partie de l'élément de rigidification 3 qui entre en premier dans l'embout d'extrémité 1 lors de l'insertion de l'élément de rigidification 3.

Le composant 24 désigne plusieurs types de pièce constitutive du balai d'essuyage 2. Il peut s'agir du moyen de connexion 25 destiné à relier le balai d'essuyage 2 à un bras d'entraînement en rotation de ce balai. Il peut également s'agir d'un ou plusieurs déflecteurs d'air 26 rapportés sur l'élément de rigidification 3 et dont la fonction est de transformer le flux d'air passant sur le balai d'essuyage 2 en une force d'appui qui plaque la lame 4 contre la vitre.

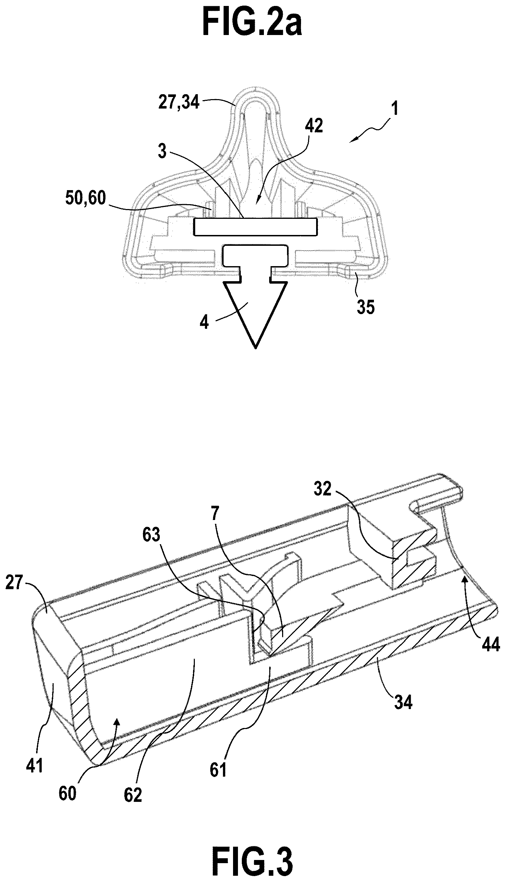

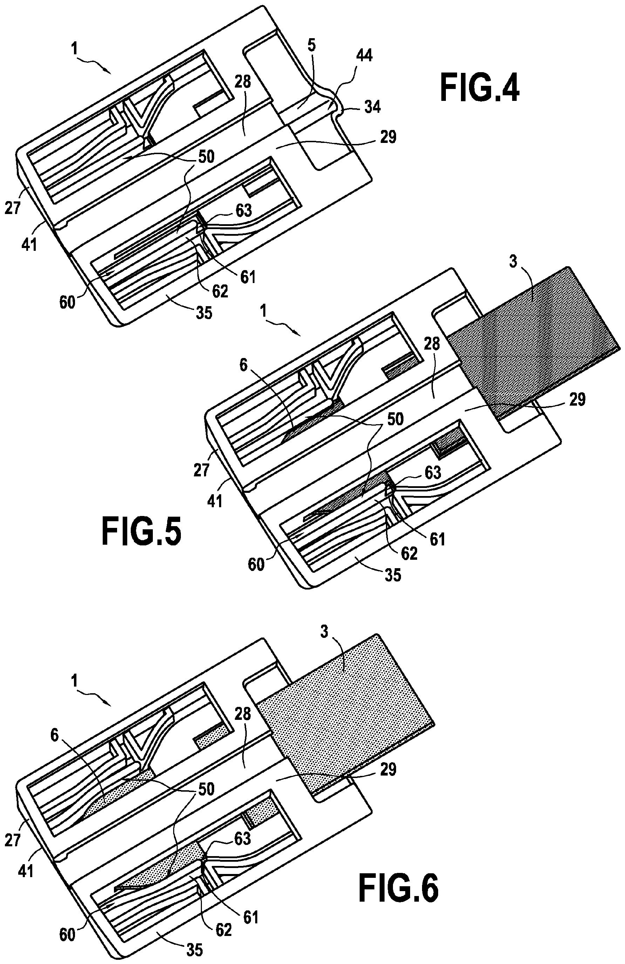

Les figures 2 et 4 montrent en perspective un embout d'extrémité 1. Un tel embout d'extrémité 1 présente une fonction de maintien mécanique des composants constitutifs du balai d'essuyage 2. Cet embout d'extrémité 1 présente également une fonction esthétique puisqu'il permet de couvrir proprement et ainsi cacher l'extrémité de la lame 4, l'extrémité de l'élément de rigidification 3 et l'extrémité du composant 24, notamment le déflecteur d'air 26.

L'embout d'extrémité 1 présente une enveloppe externe 27 dont une partie supérieure, relativement à l'orientation de l'embout lorsqu'il est en place sur un balai d'essuyage opérationnel sur le véhicule, forme une paroi de couverture 34 et une partie inférieure forme une paroi de fond 35. Notamment, la paroi de couverture 34 présente un profil globalement complémentaire au profil extérieur du déflecteur d'air 26. A l'intérieur d'un volume interne 42 délimité par l'enveloppe externe 27, l'embout d'extrémité 1 comprend un logement 5 de réception de l'élément de rigidification 3. La partie de l'élément de rigidification 3 reçue dans le logement 5 est la partie terminale 6. On a représenté sur une figure 2a une représentation schématique de l'emplacement de l'élément de rigidification dans le logement de réception 5. L'embout d'extrémité 1 comprend encore une rainure 28 dont la fonction est de retenir mécaniquement un talon de la lame 4, également représenté schématiquement sur la figure 2a. Cette rainure 28 est ménagée dans la paroi de fond 35 en étant ainsi ouverte vers l'extérieur, cette ouverture étant délimitée par deux crochets 29 qui s'étendent longitudinalement le long de l'embout d'extrémité 1 et qui forment respectivement butée empêchant le dégagement vertical de la lame et notamment du talon.

La rainure 28 et le logement 5 sont formés à l'intérieur du volume interne 42 délimité par l'enveloppe externe 27, en étant délimités par un ensemble de parois issues de matière avec l'enveloppe externe et formant ensemble un corps 30 de l'embout d'extrémité 1.

Le logement 5 est formé dans le corps 30 de l'embout d'extrémité 1, au voisinage de la rainure 28, du côté opposé de l'ouverture de la rainure vers l'extérieur, selon une direction perpendiculaire à un plan d'extension de la rainure 28. Il s'étend dans un plan général d'extension parallèle au plan d'extension de la rainure 28. Le logement 5 est délimité par une paroi de support 31, qui participe aussi bien à délimiter le logement 5 que la rainure 28, et au moins deux bords latéraux 32, ainsi que par au moins un flanc 33, et notamment deux flancs 33, disposés en regard de la paroi de support 31. Ces flancs 33 sont formés chacun par une arête issue de matière avec l'enveloppe externe 27. Les flancs 33 s'étendent dans des plans perpendiculaires à un plan dans lequel s'étend la paroi de support 31, et ainsi parallèles à des plans d'extension des bords latéraux 32.

L'enveloppe externe 27 de l'embout d'extrémité 1 comprend une paroi extérieure 41 qui ferme longitudinalement le volume interne 42 de l'embout, à l'opposé d'une ouverture 44 ménagée dans l'extrémité longitudinale intérieure. Cette ouverture 44 permet l'insertion de l'élément de rigidification 3 et de la lame d'essuyage du balai associé dans l'embout d'extrémité.

Tel que cela sera décrit ci-après plus en détails, au moins deux types d'éléments de rigidification 3, distinguables par leurs dimensions et notamment par leur largeur, c'est-à-dire la dimension comprise entre les deux bords latéraux 32 du logement 5, peuvent être insérés dans le logement 5 de l'embout d'extrémité 1.

L'embout d'extrémité 1 comprend encore un moyen de verrouillage 7 visible sur la figure 2. Il s'agit d'un moyen dont la fonction est d'assurer la retenue de l'embout d'extrémité 1 sur le balai d'essuyage 2 selon la direction longitudinale, pour l'empêcher de se déplacer vers l'extérieur du balai d'essuyage 2, selon la direction longitudinale de celui-ci. Ce moyen de verrouillage 7 prend par exemple la forme d'une dent ou d'une languette au bout de laquelle est ménagée une dent, destinée à se loger dans une encoche formée sur ou dans l'élément de rigidification 3. Le moyen de verrouillage 7 est formé dans une matière ayant des propriétés élastiques et il est configuré pour se déformer élastiquement au passage de la partie terminale 6 de l'élément de rigidification 3 dans l'embout d'extrémité 1, et pour reprendre sa forme d'origine lorsque la dent peut pénétrer dans l'encoche.

Un dispositif de maintien en position 50 est prévu dans le volume interne de l'embout d'extrémité 1 pour participer au guidage de l'extrémité 6 de l'élément de rigidification 3 quel que soit son type et assurer sa position afin que le verrouillage soit correctement réalisé. Le dispositif de maintien en position 50 est apte à prendre au moins une position de repos et une position déformée.

En position de repos, qui est la position du dispositif de maintien en position 50 quand aucun élément de rigidification 3 est inséré dans l'embout d'extrémité 1, ou le cas échéant lors de l'insertion d'un premier type d'élément de rigidification 3 dans l'embout d'extrémité 1, le dispositif de maintien en position 50 s'étend parallèlement ou sensiblement parallèlement à la direction d'insertion de l'élément de rigidification 3 dans le logement 5 de l'embout d'extrémité 1.

De sorte, en position de repos, le dispositif de maintien en position 50 est agencé pour servir de moyen de guidage à un élément de rigidification 3 du premier type.

Le dispositif de maintien en position 50 selon l'invention est configuré pour se déformer le cas échéant sous l'effet de l'introduction dans l'embout d'extrémité d'un élément de rigidification plus large que l'élément de rigidification standard, avec des propriétés élastiques qui participent à l'enserrement de cet élément de rigidification et qui évite son débattement à l'intérieur de l'embout.

Dans l'exemple illustré, le dispositif de maintien en position 50 comporte deux nervures 60 au moins en partie déformable élastiquement au passage de l'élément de rigidification, ces nervures étant notamment issues de matière avec l'enveloppe externe 27 de l'embout d'extrémité 1, en s'étendant parallèlement l'une à l'autre dans leur position de repos, c'est-à-dire leur position d'origine sans sollicitation de déformation de l'élément de rigidification.

Plus particulièrement, chaque nervure 60 est issue de matière avec la paroi de couverture 34 de l'enveloppe externe 27 et s'étend vers l'intérieur de l'embout en saillie de la face interne de cette paroi de couverture 34. Ces deux nervures 60 sont parallèles entre elles. Ainsi, le plan général d'extension d'une nervure 60 est parallèle à celui d'une autre nervure 60. En outre, les nervures 60 sont formées symétriquement par rapport à un plan longitudinal, et notamment le plan longitudinal médian, de l'embout. Ce plan longitudinal médian, passant notamment au centre de la rainure 28 et au centre du logement 5, sépare l'embout d'extrémité 1 en deux moitiés internes, symétriques l'une par rapport à l'autre, chaque nervure 60 occupant la même position et s'étendant de la même manière dans sa moitié respective. On comprend que la définition d'un tel plan médian s'entend par rapport aux composants interne de l'embout et qu'elle s'applique pour des embouts dont l'enveloppe externe est aussi bien symétrique qu'asymétrique.

On comprendra que, sans sortir du contexte de l'invention, le dispositif de maintien en position 50 pourrait comprendre une seule nervure conforme à ce qui a été et va être décrit, c'est-à-dire une nervure agencée de manière à être flexible et déformable élastiquement au contact d'une extrémité d'un élément de rigidification, quel que soit le type et notamment les dimensions de cet élément de rigidification, avec en regard de cette seule nervure 60 déformable une paroi rigide de l'autre côté du plan longitudinal médian de l'embout. L'élément de rigidification inséré dans le logement d'un embout d'extrémité ainsi agencé est guidé par la paroi rigide et par la nervure déformable du dispositif de maintien en position, seul la nervure se déformant pour plaquer l'élément de rigidification contre la paroi rigide.

On va décrire par la suite plus en détails l'agencement et la fonction de ce dispositif de maintien en position 50 en présentant le dispositif à deux nervures, étant noté que ceci serait équivalent avec une nervure.

Chaque nervure 60 s'étend longitudinalement le long d'une face interne de la paroi de couverture 34, depuis la paroi extérieure 41. Chaque nervure 60 est ainsi en contact avec une face interne de l'enveloppe externe 27 de l'embout d'extrémité par deux de ses côtés.

Les nervures 60 sont conformées en « L » dans un plan perpendiculaire au plan défini par l'élément de rigidification 3 et parallèle au sens d'insertion de l'élément de rigidification 3 dans le logement 5. En d'autres termes, la nervure 60 prend la forme d'une paroi de faible épaisseur, s'étendant dans le volume interne de l'embout depuis la paroi de couverture 34, avec une partie de base 61 qui s'étend directement en saillie de la paroi de couverture et une partie qui la prolonge à distance de la paroi de couverture et qui forme une lame déformable 62. La dimension longitudinale de la lame déformable 62 est plus petite que la dimension longitudinale de la partie de base 61, ces deux composantes de la nervure prenant base toutes sur la partie extérieure 41. De la sorte, la partie de base 61 forme une excroissance longitudinale en direction de l'ouverture 44. La forme en « L » des nervures 60 est particulièrement visible sur la figure 3.

Un épaulement est formé entre la partie de base 61 et la lame déformable 62. Le bord d'épaulement 63 présente un profil bombé dont l'intérêt sera décrit ci-après dans la description détaillée de la coopération de l'embout d'extrémité selon l'invention avec des éléments de rigidification de plusieurs dimensions. On saura également décrire l'intérêt de la dimension verticale de la lame déformable, plus importante que celle de la partie de base, et qui lui confère une souplesse susceptible de permettre une déformation élastique selon la direction transversale.

Dans un deuxième temps, il convient de noter des caractéristiques relatives à la position de ces nervures, et notamment par rapport à la position d'un moyen de verrouillage 7 correspondant.

Tel que cela est notamment visible sur la figure 2 et sur la figure 3, une nervure 60 du dispositif de maintien en position 50 et un moyen de verrouillage 7 correspondant sont disposés dans le même plan parallèle au plan médian longitudinal de l'embout décrit ci-dessus. Ainsi, transversalement, une nervure 60 du dispositif de maintien en position 50 est disposée, au moins en partie, au-dessus du moyen de verrouillage 7, de manière à former butée au déplacement élastique du moyen de verrouillage 7 lorsque celui-ci se déforme pour laisser passage à l'élément de rigidification avant de se glisser dans l'encoche correspondante.

On comprend que l'excroissance formée par la partie de base 61 est agencée pour collaborer avec le moyen de verrouillage 7 pour assurer la retenue de l'embout d'extrémité 1 sur le balai d'essuyage 2 selon la direction longitudinale, en empêchant le moyen de verrouillage 7 de sortir de l'encoche. Plus précisément, cette excroissance vient se loger au-dessus de l'élément de verrouillage lorsque l'embout est monté sur un balai d'essuyage dans la position fonctionnelle de ce dernier.

Par ailleurs, l'épaulement, et notamment le bord d'épaulement 63, est disposé en regard du moyen de verrouillage 7, en retrait longitudinal vers la paroi extérieure 41 de l'embout d'extrémité, de sorte que la lame déformable 62 s'étend derrière ce moyen de verrouillage 7. On comprend que dans cet agencement, l'élément de rigidification 3 lors de son insertion est directement au contact de la lame déformable 62 après avoir déformé le moyen de verrouillage 7 sur son passage.

Les nervures 60 du dispositif de maintien en position 50 sont également positionnées par rapport au logement 5 à travers lequel passent les éléments de rigidification 3. Tel que cela a été précisé précédemment, les nervures 60 sont formées symétriquement par rapport au plan longitudinal médian de l'embout passant au centre du logement 5. Et il convient de noter que l'écartement d'une nervure 60 à l'autre est inférieur à la largeur, c'est-à-dire la dimension transversale parallèle à l'orientation de la dimension entre les nervures, du logement. Par ailleurs, la lame déformable 62 s'étend sur une hauteur telle, c'est-à-dire à distance de la paroi de couverture 34, qu'elle s'étend en fond du logement 5 et à la hauteur de celui-ci. De la sorte, et tel que cela sera décrit ci-après, un élément de rigidification 3 traversant le logement 5 et de largeur égale à la largeur du logement 5 entre en contact avec chacune des lames déformables 62 des nervures 60.

Chaque nervure 60 du dispositif de maintien en position 50 est agencée pour collaborer avec la partie terminale 6 de l'élément de rigidification 3 en permettant son insertion dans le logement 5 quelle que soit sa largeur. Tel que cela peut être visible sur les figures 5 et 6, l'élément de rigidification 3, qu'il soit d'un premier type (figure 5) ou d'un deuxième type (figure 6), comprend une première face visible sur ces figures, et orientée vers la vitre du véhicule à nettoyer, et une face opposée à cette première face. La dimension entre ces deux faces constitue l'épaisseur de l'élément de rigidification 3 et elle peut varier selon que l'on considère un premier type d'élément de rigidification, moins large, ou un deuxième type d'élément de rigidification, plus large. La largeur de l'élément de rigidification 3 est la dimension restante, c'est-à-dire celle entre les faces perpendiculaires à celles définissant la longueur de l'élément de rigidification 3 et celles définissant son épaisseur, et il est visible sur les figures 5 et 6 que cette dimension varie selon que l'on considère le premier ou le deuxième type d'élément de rigidification.

Un procédé de montage d'un balai d'essuyage 2 équipé d'un embout d'extrémité 1 va maintenant être décrit, afin de détailler la coopération du dispositif de maintien en position 50 avec un élément de rigidification 3 quel que soit son type.

Selon un exemple non limitatif d'un tel procédé, illustré à la figure 5, l'insertion de la partie terminale 6 d'un premier type d'élément de rigidification 3 dans l'embout d'extrémité 1 se fait par une translation longitudinale depuis l'ouverture 44 vers la paroi extérieure 41 dans le logement 5. La partie terminale 6 du premier type d'élément de rigidification pénètre dans le logement 5, déforme sur son passage le moyen de verrouillage 7 et arrive ensuite au niveau, selon la direction longitudinale, du bord d'épaulement 63 des nervures 60.

La largeur d'un élément de rigidification d'un premier type est inférieure à la largeur du logement 5 et sensiblement égale à la distance des nervures 60 entre elles lorsqu'elles sont au repos, c'est-à-dire parallèle à la direction longitudinale. La souplesse des lames déformables 62 des nervures permet un ajustement en position transversale de l'élément de rigidification d'un premier type, de manière à centrer cet élément de rigidification sur le plan médian longitudinal. En effet, l'élément de rigidification, s'il n'est pas centré lors de son insertion, vient déformer une des deux nervures en l'écartant de l'autre et sollicite uniquement cette nervure dont les propriétés élastiques tendent à ramener l'élément de rigidification vers l'autre nervure. Le bord arrondi du bord d'épaulement 63 facilite l'écartement de la lame déformable 62 au contact avec la partie terminale 6 de l'élément de rigidification 3.

Il en résulte un recentrage de l'élément de rigidification, qui permet de faire coopérer à coup sur le moyen de verrouillage 7 avec la ou les encoches correspondantes ménagées sur l'élément de rigidification lorsque l'élément de rigidification est suffisamment enfoncé dans l'embout d'extrémité. Et il en résulte un enserrement de la partie terminale 6 entre les nervures qui maintiennent transversalement entre elles l'élément de rigidification du premier type, de largeur égale ou légèrement supérieure à la distance entre les nervures.

Il convient de noter que le dispositif de maintien en position 50 est configuré de sorte que la ou les nervures 60 se déforment élastiquement selon une première direction, ici transversale en référence au trièdre précédemment défini, et de sorte que cette première direction est distincte, et dans le cas décrit perpendiculaire, à la direction de déformation de la languette formant moyen de verrouillage 7.

Sur la figure 6, on peut voir un embout d'extrémité 1, identique à celui exposé dans le premier exemple de procédé de montage, accueillant une partie terminale 6 d'un deuxième type d'élément de rigidification 3, similaire dans la forme à celle exposée dans le premier exemple de procédé de montage, mais d'une largeur supérieure.

Conformément à ce qui précède, lors de l'introduction de l'élément de rigidification 3 dans l'embout d'extrémité 1, la partie terminale 6 entre dans le logement 5 par l'ouverture 44, en déformant élastiquement le moyen de verrouillage 7 sur son passage. La largeur de l'élément de rigidification de deuxième type est sensiblement égale à la largeur du logement 5, de sorte que l'élément de rigidification est d'ores et déjà centré lors de son insertion. Il en résulte un contact simultané de la partie terminale 6, plus spécifiquement sa face avant, avec chacune des nervures 60 du dispositif de maintien en position 50, et plus particulièrement leur bord d'épaulement 63. La translation entrante de l'élément de rigidification 3 continue, et déforme progressivement les nervures 60. C'est la déformation des nervures, et plus particulièrement l'écartement des nervures l'une de l'autre, au passage de l'élément de rigidification 3 qui fait passer le dispositif de maintien en position 50 en position déformée. Cette déformation s'effectue selon un plan de débattement 100 qui est un plan parallèle au plan défini par l'élément de rigidification 3, ce qui écarte les nervures 60 l'une de l'autre. L'élasticité des lames déformables tend à ramener l'élément de rigidification vers la nervure opposée, et on comprend que l'on assure ainsi le centrage de l'élément de rigidification dans une position finale de montage, avec l'élément de rigidification enserré par chacune des nervures. C'est également le retour élastique des nervures 60 déformées qui enserre l'élément de rigidification et qui assure son maintien en position.

La déformation est rendue possible par la forme de la lame déformable 62. La lame déformable 62 est agencée dans le prolongement de la partie de base 61, à l'opposé de l'enveloppe externe 27 de laquelle s'étend cette partie de base 61. Ainsi, depuis l'enveloppe externe 27, la nervure 60 comprend d'abord la partie de base 61, puis la lame déformable 62. La partie de base 61 est ainsi en contact avec l'enveloppe extérieure 27, la lame déformable 62 étant en contact avec la partie de base 61. Des variantes de réalisation des nervures 60, différant par l'agencement de la partie de base 61 et/ou de la lame déformable 62 les constituant, peuvent néanmoins être envisagées. Certaines de ces variantes ont été exposées plus tôt dans la demande.

Quel que soit le type d'élément de rigidification 3 utilisé par le balai d'essuyage 2, la zone de contact entre chaque nervure 60 et l'élément de rigidification 3, dans les positions finales illustrées sur les figures 5 et 6, reste la même. En d'autres termes, que la déformation des nervures 60 soit inexistante ou peu importante (figure 5) ou bien qu'elle soit à la limite de provoquer une déformation plastique des nervures 60 (figure 6), la position finale de montage génère un contact entre une lame déformable 62 de la nervure 60 et un bord latéral de l'élément de rigidification 3.

Le balai d'essuyage 2 ainsi équipé d'un embout d'extrémité 1 peut maintenant être monté sur un bras d'entrainement par l'intermédiaire d'un connecteur. Le bras d'entrainement est mis en mouvement par un moteur de manière à permettre au balai d'essuyage 2, lors de son déplacement, d'essuyer de façon efficace la vitre d'un véhicule équipé d'un tel système.

La description qui précède explique clairement comment l'invention permet d'atteindre les objectifs qu'elle s'est fixé et notamment de proposer un embout d'extrémité 1 pouvant accueillir plusieurs types d'élément de rigidification 3, différant notamment par leur largeur, tout en sécurisant leur montage dans l'embout d'extrémité 1.

L'invention porte notamment sur un embout d'extrémité à l'intérieur duquel une ou plusieurs nervures déformables élastiquement présentent une partie de base en saillie d'une enveloppe externe de l'embout et une lame déformable prolongeant la partie de base à l'opposé de cette enveloppe externe.

Bien entendu, diverses modifications peuvent être apportées par l'homme du métier à l'embout d'extrémité qui vient d'être décrit à titre d'exemple non limitatif, dès lors que l'on met en œuvre au moins un dispositif de maintien en position agencé pour limiter un débattement de la partie terminale de l'élément de rigidification qu'il soit indifféremment d'un premier ou d'un deuxième type. L'embout d'extrémité selon l'invention peut notamment être utilisé avec un élément de rigidification d'une largeur équivalente à la dimension entre les deux nervures ayant un rôle de guidage et de calage de l'élément de rigidification, et les nervures présentant en position assemblée une légère déformation avec une compensation de jeu.

## Revendications

1. Embout d'extrémité (1) pour un balai d'essuyage (2) d'une vitre d'un véhicule, comprenant un logement (5) s'étendant principalement selon une première direction et apte à recevoir indifféremment un premier type d'élément de rigidification (3) d'une première largeur ou un deuxième type d'élément de rigidification (3) d'une deuxième largeur supérieure à la première largeur, l'embout comportant au moins un moyen de verrouillage configuré pour assurer la retenue de l'embout d'extrémité sur le balai et au moins un dispositif de maintien en position (50) à déformation élastique agencé pour coopérer indifféremment avec le premier type d'élément de rigidification (3) ou le deuxième type d'élément de rigidification (3), le dispositif de maintien en position (50) étant agencé pour prendre au moins une position de repos non déformée et une position déformée élastiquement dans laquelle le dispositif de maintien en position (50) prend appui contre le deuxième type de l'élément de rigidification (3) pour le bloquer dans une position finale de montage.

2. Embout d'extrémité (1) selon la revendication précédente, dans lequel le dispositif de maintien en position (50) en position de repos est agencé pour servir de moyen de guidage au premier type d'élément de rigidification (3).

3. Embout d'extrémité (1) selon l'une quelconque des revendications précédentes, dans lequel le dispositif de maintien en position (50) est agencé pour subir une déformation au contact d'une partie terminale (6) d'un élément de rigidification (3) la déformation du dispositif de maintien en position (50) se faisant notamment selon un plan de débattement (100), le plan de débattement (100) étant un plan parallèle au plan défini par l'élément de rigidification (3).

4. Embout d'extrémité (1) selon l'une quelconque des revendications précédentes, dans lequel le dispositif de maintien en position (50) prend la forme d'au moins une nervure (60), notamment deux nervures disposées parallèlement l'une à l'autre, dont au moins une partie est déformable élastiquement au passage de l'élément de rigidification d'un premier ou d'un deuxième type.

5. Embout d'extrémité (1) selon la revendication précédente, dans lequel la moins une nervure (60) est fabriquée dans un matériau ou un alliage de matériaux possédant des propriétés élastiques.

6. Embout d'extrémité (1) selon l'une quelconque des revendications 4 à 5, dans lequel l'embout d'extrémité (1) est délimité par une enveloppe externe (27), l'au moins une nervure (60) s'étendant depuis une face interne de l'enveloppe externe (27).

7. Embout d'extrémité (1) selon l'une quelconque des revendications 4 à 6, dans lequel la ou les nervures (60) s'étendent en fond du logement (5) par rapport à un sens d'insertion de l'élément de rigidification (3) dans l'embout.

8. Embout d'extrémité (1) selon l'une quelconque des revendications 4 à 7, dans lequel l'enveloppe externe (27) comprend une paroi de couverture (34) et une paroi de fond (35), la paroi de fond (35) étant ouverte pour laisser traverser le balai (4) et la paroi de couverture (34) étant disposée à l'opposé de la paroi de fond (35), la au moins une nervure (60) s'étendant depuis la paroi de couverture (34) de l'enveloppe externe (27).

9. Embout d'extrémité (1) selon l'une quelconque des revendications 4 à 8, dans lequel la au moins une nervure (60) a une forme de L, pris dans une coupe perpendiculaire au plan défini par l'élément de rigidification (3) et parallèle au sens d'insertion de l'élément de rigidification (3) dans l'embout d'extrémité (1).

10. Embout d'extrémité (1) selon l'une quelconque des revendications 4 à 9, dans lequel la au moins une nervure (60) présente une partie de base (61) en saillie de l'enveloppe externe (27) de l'embout et une lame déformable (62) prolongeant la partie de base (61) à l'opposé de cette enveloppe externe.

11. Embout d'extrémité (1) selon l'une quelconque des revendications précédentes, dans lequel le moyen de verrouillage (7) comporte une dent destinée à se loger dans une encoche formée sur ou dans l'élément de rigidification (3).

12. Embout d'extrémité (1) selon l'une quelconque des revendications précédentes, dans lequel le moyen de verrouillage et le dispositif de maintien en position sont agencés de manière à ce que ledit dispositif de maintien en position forme butée au déplacement élastique du moyen de verrouillage.

13. Embout d'extrémité (1) selon l'une quelconque des revendications précédentes, dans lequel le moyen de verrouillage et le dispositif de maintien en position sont agencés de manière à se déformer élastiquement au passage de l'élément de rigidification selon des directions différentes, notamment perpendiculaires.

14. Balai d'essuyage (2) comprenant au moins un élément de rigidification (3) ainsi qu'une lame (4) destinée à être appliquée contre la vitre, et au moins un embout d'extrémité (1) selon l'une quelconque des revendications précédentes, où la partie terminale de l'élément de rigidification (3) s'étend dans le logement (5) de l'embout d'extrémité (1).

15. Système d'essuyage d'une vitre d'un véhicule comprenant un bras et un balai d'essuyage (2) selon la revendication précédente.

## Patentansprüche

1. Endstück (1) für ein Wischblatt (2) für eine Fensterscheibe eines Fahrzeugs, welches eine Aufnahme (5) umfasst, die sich hauptsächlich in einer ersten Richtung erstreckt und geeignet ist, unterschiedslos einen ersten Typ von Versteifungselement (3) mit einer ersten Breite oder einen zweiten Typ von Versteifungselement (3) mit einer zweiten Breite, die größer als die erste Breite ist, aufzunehmen, wobei das Endstück wenigstens ein Verriegelungsmittel, das dafür ausgelegt ist, den Halt des Endstücks auf dem Wischblatt sicherzustellen, und wenigstens eine elastisch verformbare Positionshaltevorrichtung (50), die dafür ausgebildet ist, unterschiedslos mit dem ersten Typ von Versteifungselement (3) oder dem zweiten Typ von Versteifungselement (3) zusammenzuwirken, umfasst, wobei die Positionshaltevorrichtung (50) dafür ausgebildet ist, wenigstens eine nicht verformte Ruheposition und eine elastisch verformte Position, in welcher sich die Positionshaltevorrichtung (50) an dem zweiten Typ von Versteifungselement (3) abstützt, um es in einer endgültigen Montageposition zu blockieren, einzunehmen.

2. Endstück (1) nach dem vorhergehenden Anspruch, wobei die Positionshaltevorrichtung (50) in der Ruheposition dafür ausgebildet ist, als Führungsmittel für den ersten Typ von Versteifungselement (3) zu dienen.

3. Endstück (1) nach einem der vorhergehenden Ansprüche, wobei die Positionshaltevorrichtung (50) dafür ausgebildet ist, beim Kontakt mit einem Endteil (6) eines Versteifungselements (3) eine Verformung zu erfahren, wobei die Verformung der Positionshaltevorrichtung (50) insbesondere in einer Auslenkungsebene (100) erfolgt, wobei die Auslenkungsebene (100) eine Ebene ist, die zu der durch das Versteifungselement (3) definierten Ebene parallel ist.

4. Endstück (1) nach einem der vorhergehenden Ansprüche, wobei die Positionshaltevorrichtung (50) die Form wenigstens einer Rippe (60) annimmt, insbesondere von zwei parallel zueinander angeordneten Rippen, von denen wenigstens ein Teil beim Durchgang des Versteifungselements eines ersten oder eines zweiten Typs elastisch verformbar ist.

5. Endstück (1) nach dem vorhergehenden Anspruch, wobei die wenigstens eine Rippe (60) aus einem Material oder einer Legierung von Materialien hergestellt ist, das bzw. die elastische Eigenschaften besitzt.

6. Endstück (1) nach einem der Ansprüche 4 bis 5, wobei das Endstück (1) von einer äußeren Hülle (27) begrenzt wird, wobei sich die wenigstens eine Rippe (60) von einer Innenseite der äußeren Hülle (27) aus erstreckt.

7. Endstück (1) nach einem der Ansprüche 4 bis 6, wobei sich die Rippe oder die Rippen (60) am Boden der Aufnahme (5) erstrecken, bezogen auf eine Richtung des Einsetzens des Versteifungselements (3) in das Endstück.

8. Endstück (1) nach einem der Ansprüche 4 bis 7, wobei die äußere Hülle (27) eine Deckwand (34) und eine Bodenwand (35) umfasst, wobei die Bodenwand (35) offen ist, um das Wischblatt (4) hindurchzulassen, und die Deckwand (34) gegenüber der Bodenwand (35) angeordnet ist, wobei sich die wenigstens eine Rippe (60) von der Deckwand (34) der äußeren Hülle (27) aus erstreckt.

9. Endstück (1) nach einem der Ansprüche 4 bis 8, wobei die wenigstens eine Rippe (60) in einem Querschnitt, der zu der durch das Versteifungselement (3) definierten Ebene senkrecht ist und zur Richtung des Einsetzens des Versteifungselements (3) in das Endstück (1) parallel ist, eine L-Form aufweist.

10. Endstück (1) nach einem der Ansprüche 4 bis 9, wobei die wenigstens eine Rippe (60) einen Basisteil (61), der von der äußeren Hülle (27) des Endstücks aus vorsteht, und eine verformbare Zunge (62), die den Basisteil (61) auf der dieser äußeren Hülle gegenüberliegenden Seite verlängert, aufweist.

11. Endstück (1) nach einem der vorhergehenden Ansprüche, wobei das Verriegelungsmittel (7) einen Zahn umfasst, der dazu bestimmt ist, in einer Ausnehmung aufgenommen zu werden, die auf oder in dem Versteifungselement (3) ausgebildet ist.

12. Endstück (1) nach einem der vorhergehenden Ansprüche, wobei das Verriegelungsmittel und die Positionshaltevorrichtung derart angeordnet sind, dass die Positionshaltevorrichtung einen Anschlag für die elastische Verschiebung des Verriegelungsmittels bildet.

13. Endstück (1) nach einem der vorhergehenden Ansprüche, wobei das Verriegelungsmittel und die Positionshaltevorrichtung derart angeordnet sind, dass sie sich beim Durchgang des Versteifungselements in unterschiedlichen, insbesondere zueinander senkrechten Richtungen elastisch verformen.

14. Wischblatt (2), welches wenigstens ein Versteifungselement (3) sowie einen Wischergummi (4), der dazu bestimmt ist, an die Fensterscheibe angedrückt zu werden, und wenigstens ein Endstück (1) nach einem der vorhergehenden Ansprüche umfasst, wobei sich der Endteil des Versteifungselements (3) in der Aufnahme (5) des Endstücks (1) erstreckt.

15. Wischsystem für eine Fensterscheibe eines Fahrzeugs, welches einen Arm und ein Wischblatt (2) nach dem vorhergehenden Anspruch umfasst.

## Claims

1. End tip (1) for a wiper blade (2) of a screen of a vehicle, comprising a housing (5) extending principally in a first direction and so adapted as to receive equally a first type of stiffening element (3) having a first width or a second type of stiffening element (3) having a second width greater than the first width, the end tip comprising at least one locking means configured to ensure the retention of the end tip on the blade and at least one device for maintaining in position (50) possessing elastic deformation so arranged as to cooperate equally with the first type of stiffening element (3) or the second type of stiffening element (3), the device for maintaining in position (50) being so arranged as to adopt at least an undeformed rest position and an elastically deformed position in which the device for maintaining in position (50) abuts against the second type of the stiffening element (3) in order to secure it in a final installed position.

2. End tip (1) according to the preceding Claim, in which the device for maintaining in position (50) in the rest position is so arranged as to serve as a means of guiding for the first type of stiffening element (3).

3. End tip (1) according to any one of the preceding Claims, in which the device for maintaining in position (50) is so arranged as to undergo deformation in contact with a terminal portion (6) of a stiffening element (3), the deformation of the device for maintaining in position (50) taking place more particularly in a displacement plane (100), the displacement plane (100) being a plane parallel to the plane defined by the stiffening element (3).

4. End tip (1) according to any one of the preceding Claims, in which the device for maintaining in position (50) adopts the form of at least one rib (60), more particularly two ribs disposed parallel to one another, of which at least one portion is elastically deformable for the passage of the stiffening element of a first or of a second type.

5. End tip (1) according to the preceding Claim, in which the at least one rib (60) is made from a material or an alloy of materials having elastic properties.

6. End tip (1) according to any one of Claims 4 to 5, in which the end tip (1) is delimited by an outer envelope (27), the at least one rib (60) extending from an internal face of the outer envelope (27).

7. End tip (1) according to any one of Claims 4 to 6, in which the one or more ribs (60) extend in the bottom of the housing (5) in relation to a direction of insertion of the stiffening element (3) into the tip.

8. End tip (1) according to any one of Claims 4 to 7, in which the outer envelope (27) comprises a covering wall (34) and a bottom wall (35), the bottom wall (35) being open in order to allow the blade (4) to pass through, and the covering wall (34) being disposed on the opposite side from the bottom wall (35), the at least one rib (60) extending from the covering wall (34) of the outer envelope (27).

9. End tip (1) according to any one of Claims 4 to 8, in which the at least one rib (60) is in the form of an L, when considered in a cross section perpendicular to the plane defined by the stiffening element (3), and is parallel to the direction of insertion of the stiffening element (3) into the end tip (1).

10. End tip (1) according to any one of Claims 4 to 9, in which the at least one rib (60) has a bottom portion (61) protruding from the outer envelope (27) of the tip and a deformable blade (62) extending the bottom portion (61) on the opposite side from said outer envelope.

11. End tip (1) according to any one of the preceding Claims, in which the locking means (7) includes a tooth intended to be accommodated in a notch formed on or in the stiffening element (3).

12. End tip (1) according to any one of the preceding Claims, in which the locking means and the device for maintaining in position are arranged in such a way that said device for maintaining in position forms an abutment for the elastic displacement of the locking means.

13. End tip (1) according to any one of the preceding Claims, in which the locking means and the device for maintaining in position are arranged in such a way as to deform elastically for the passage of the stiffening element in different directions, more particularly perpendicular directions.

14. Wiper blade (2) comprising at least one stiffening element (3) as well as a blade (4) intended to be applied against the screen, and at least one end tip (1) according to any one of the preceding Claims, where the terminal portion of the stiffening element (3) extends in the housing (5) of the end tip (1).

15. System for wiping a screen of a vehicle comprising an arm and a wiper blade (2) according to the preceding Claim.
